# FASCICULE DE BREVET EUROPEEN

(11) **EP 0 558 412 B1**
(45) Date de publication et mention de la délivrance du brevet: **21.05.1997**
(21) Numéro de dépôt: 93400480.5
(22) Date de dépôt: 25.02.1993
(51) Int. Cl.: B60H 1/03, B60H 1/00, B60H 1/06

(54) **Dispositif de chauffage/refroidissement pour véhicule électrique**
Heiz- und/oder Kühlvorrichtung für ein Elektrofahrzeug
Heating and/or cooling device for an electric vehicle

(30) Priorité: 25.02.1992 FR 9202178
(43) Date de publication de la demande: 01.09.1993
(73) Titulaire: VALEO CLIMATISATION, 78321 La Verrière (FR)
(72) Inventeur: Dauvergne, Jean, F-95470 Fosses (FR)
(74) Mandataire: Gamonal, Didier

(56) Documents cités:
- EP-A- 0 504 653
- BE-A- 348 151
- CH-A- 424 504
- DE-B- 1 159 293
- US-A- 3 469 073
- US-A- 4 459 466

## Description

L'invention concerne le refroidissement des moteurs de véhicules et le chauffage de l'habitacle des véhicules.

Des dispositifs de refroidissement sont associés aux moteurs à explosion équipant la plupart des véhicules automobiles. Lorsque les conditions climatiques nécessitent un chauffage de l'habitacle du véhicule, la chaleur cédée par le moteur au dispositif de refroidissement est suffisante pour assurer ce chauffage, dès que le moteur a atteint sa température normale de fonctionnement.

Au contraire, lorsque le véhicule est entraîné par un moteur à faibles rejets thermiques, notamment un moteur électrique, la chaleur récupérée par le refroidissement de ce moteur n'est pas toujours suffisante pour le chauffage de l'habitacle, et il est nécessaire de prévoir une source auxiliaire de chaleur, par exemple un radiateur électrique, pour fournir le complément de chaleur nécessaire.

D'après le document US-A-4 459 466, il est connu un dispositif pour le refroidissement d'un moteur de véhicule, comprenant un radiateur de refroidissement du moteur et un pulseur pour produire un courant d'air à travers le radiateur, placés en série dans un circuit d'air, ledit circuit formant une boucle fermée sur l'habitacle du véhicule, l'air qui traverse le radiateur provenant en totalité de l'habitacle et étant ensuite, de façon réglable, évacué vers l'extérieur du véhicule et/ou recyclé dans l'habitacle, ce dispositif comprenant une source auxiliaire de chaleur pouvant être mise en service lorsque le débit calorifique transmis du radiateur à l'air est insuffisant pour le chauffage de l'habitacle.

Ce dispositif connu présente l'inconvénient de nécessiter une multitude de volets associés à la source auxiliaire de chaleur ce qui ne peut que compliquer l'élaboration de ce dispositif.

De plus, dans le cas où l'on ne souhaite utiliser cette source circulaire de chaleur, l'air à traiter doit suivre un cheminement assez tortueux qui aboutit à une insuffisance de chauffage.

Afin de remédier aux inconvénients précités, la présente invention propose un dispositif pour le refroidissement du moteur et le chauffage de l'habitacle qui soit simple et efficace.

La présente invention vise un dispositif du type précité, caractérisé en ce que ledit circuit comprend deux branches en parallèle dont une première contient la source auxiliaire, ces deux branches étant disposées en série avec le radiateur et le pulseur, des moyens étant prévus pour faire varier la fraction du débit d'air passant dans la première branche par rapport au débit total dans les deux branches.

Des caractéristiques optionnelles avantageuses du dispositif selon l'invention sont énoncées ci-après :
- La source auxiliaire est un radiateur électrique.
- Des moyens de distribution munis d'un organe de réglage de distribution sont prévus dans la boucle, en aval du radiateur et le cas échéant de la source auxiliaire, pour distribuer de façon réglable dans différentes zones de l'habitacle courant d'air chauffé.
- Il comporte une sortie d'air réchauffé par le radiateur et une entrée d'air frais, munies de moyens de réglage de débit et disposées dans cet ordre sur la boucle fermée, dans le sens de circulation de l'air, entre le radiateur et l'habitacle.
- Le pulseur est disposé dans la boucle fermée, dans le sens de circulation de l'air, entre ladite entrée et ladite sortie.

D'autres caractéristiques et avantages de l'invention apparaîtront à l'examen de la description détaillée ci-après, et des dessins annexés, sur lesquels :
- la figure 1 est une représentation schématique d'un véhicule automobile incorporant un dispositif selon l'invention ;
- la figure 2 est un schéma partiel de ce dispositif ; et
- la figure 3 est une variante du schéma de la figure 2.

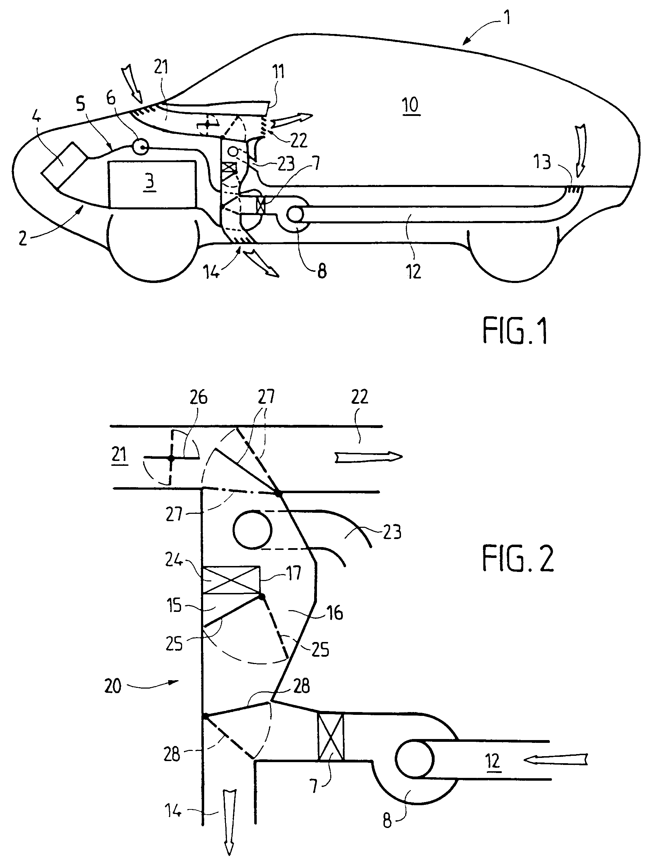

Le véhicule 1 illustré à la figure 1 est équipé d'une chaîne de traction 2 composée d'un moteur électrique 3 et d'un régulateur de puissance 4. Environ 5% de la puissance consommée par la chaîne 2 sont dissipés sous forme de chaleur par le moteur 3, et environ 10% par le régulateur 4. Ces pertes thermiques sont évacuées par une boucle d'eau chaude 5 munie d'une pompe de circulation 6 et d'un radiateur 7.

Le radiateur 7 est placé en aval d'un pulseur 8 dans un circuit de chauffage et de ventilation de l'habitacle 10 du véhicule, illustré plus en détail à la figure 2. Le pulseur 8 aspire l'air par une conduite d'entrée 12 dont l'extrémité amont 13 est placée à l'arrière de l'habitacle. En aval du radiateur 7 est disposé un volet de recyclage 28 qui permet d'envoyer l'air chauffé par le radiateur directement à l'extérieur du véhicule par une sortie 14, et/ou dans deux branches de circuit en parallèle 15 et 16. Un radiateur électrique auxiliaire 24 est disposé en travers de la branche 15 de façon à être traversé par la totalité de l'air circulant dans cette branche. Les deux branches 15 et 16 sont séparées l'une de l'autre par une paroi 17 du radiateur 24 et par un volet de mixage 25. En aval de ces deux branches sont disposées une ou plusieurs conduites de sortie 23 allant à la région inférieure de l'habitacle, au niveau des pieds des passagers. Plus en aval encore, on trouve un volet de distribution 27, une entrée d'air extérieur 21 munie d'un volet de réglage 26 et une ou plusieurs sorties 22 au niveau de la planche de bord 11.

Le volet de recyclage 28 peut se déplacer entre deux positions extrêmes indiquées respectivement en trait plein et en trait interrompu à la figure 2. Dans la première position, l'air chauffé par le radiateur 7 est entièrement évacué par la sortie 14 et n'est donc pas utilisé pour le chauffage de l'habitacle. Le pulseur 8 crée une dépression dans l'habitacle, qui est compensée, si l'air réchauffé n'est pas entièrement recyclé, par de l'air frais pénétrant dans le dispositif par l'ouverture 21 et introduit dans l'habitacle par les sorties 22 et/ou 23, en fonction de la position du volet de distribution 27.

Lorsque le volet 28 se déplace de sa première position vers sa seconde position, une fraction croissante du débit de l'air chauffé par le radiateur 7 est envoyée dans l'habitacle, par l'intermédiaire des branches 15 et 16 et des sorties 22 et/ou 23, l'envoi de la totalité de l'air chaud étant obtenu en obturant l'ouverture 14 par le volet 28 dans sa seconde position.

Pour envoyer dans l'habitacle un débit calorifique supérieur à celui fourni par le radiateur 7, il faut en outre mettre en service le radiateur auxiliaire 24 et ouvrir la branche 15 en écartant le volet 25 d'une première position extrême, indiquée en trait plein à la figure 2, où la totalité du débit d'air passe dans la branche 16, vers une seconde position extrême, indiquée en trait interrompu, dans laquelle tout l'air traverse la branche 15.

Le volet de distribution 27 permet de répartir de façon réglable entre les sorties supérieures 22 et les sorties inférieures 23 l'air chauffé par le radiateur 7 et le cas échéant par le radiateur auxiliaire 24 et l'air frais provenant de l'entrée 21. Dans une première position extrême indiquée en trait interrompu, la ou les sorties supérieures 22 sont obturées et tout l'air est envoyé aux sorties inférieures 23. Pour la seconde position extrême du volet 27, indiquée en trait mixte, l'entrée 21 et les sorties 22 sont reliées entre elles et séparées du reste du circuit par le volet 27. L'air frais introduit par l'ouverture 21, si le volet de réglage 26 est au moins partiellement ouvert, est donc exclusivement envoyé aux sorties 22, et l'air chaud vers les sorties 23. Pour les positions intermédiaires, les sorties 23 peuvent recevoir un mélange d'air frais et d'air chaud. Le volet 26 permet de régler le débit d'air extérieur pénétrant dans l'habitacle par l'intermédiaire de l'entrée 21 et du dispositif de chauffage. Il peut être complètement fermé pour un recyclage total, le volet 28 devant alors être dans sa seconde position.

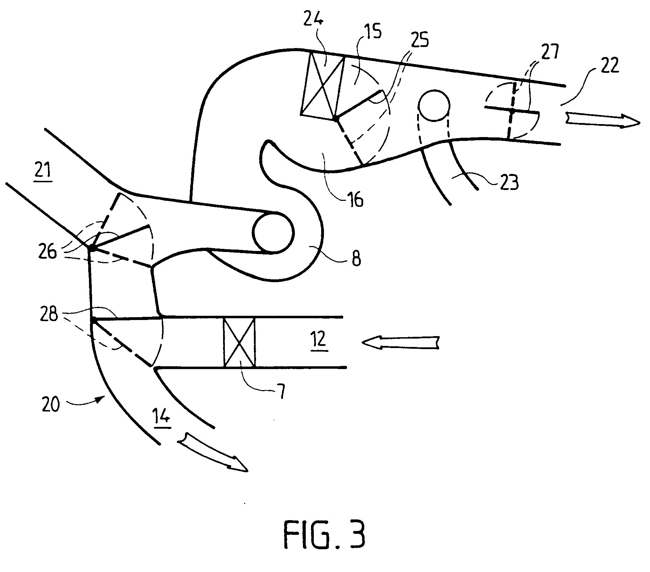

Dans le schéma de la figure 3, les mêmes numéros de référence sont utilisés pour désigner des éléments identiques ou analogues à ceux de la figure 2. Dans les deux cas, le circuit d'air 20 comprend une boucle fermée dans laquelle on trouve successivement, dans le sens de circulation de l'air, la conduite d'entrée 12 provenant de l'habitacle, le radiateur 7, la sortie 14 vers l'extérieur avec son volet de recyclage 28, les branches en parallèle 15 et 16, dont la première contient le radiateur auxiliaire 24, et les conduites de sortie 22 et 23 vers l'habitacle avec le volet de distribution 27.

Le pulseur 8, au lieu d'être en amont du radiateur 7, est interposé entre la sortie 14 et les branches en parallèle 15 et 16, l'entrée 21 étant disposée entre la sortie 14 et le pulseur. Le volet 27 ne permet donc plus, comme dans le schéma de la figure 2, de relier directement les sorties supérieures 22 vers l'habitacle à l'entrée d'air frais 21. A ce détail près, les deux dispositifs fonctionnent de la même façon.

Le schéma de la figure 3 peut encore être modifié en plaçant le pulseur 8 en aval des branches 15 et 16, c'est-à-dire entre celles-ci et les sorties 22 et 23 vers l'habitacle.

## Revendications

1. Dispositif pour le refroidissement d'un moteur (3) de véhicule, comprenant un radiateur (7) de refroidissement du moteur et un pulseur (8) pour produire un courant d'air à travers le radiateur, placés en série dans un circuit d'air, ledit circuit formant une boucle fermée sur l'habitacle du véhicule, l'air qui traverse le radiateur provenant en totalité de l'habitacle et étant ensuite, de façon réglable, évacué vers l'extérieur du véhicule et/ou recyclé dans l'habitacle, ce dispositif comprenant une source auxiliaire de chaleur (24) pouvant être mise en service lorsque le débit calorifique transmis du radiateur à l'air est insuffisant pour le chauffage de d'habitacle, caractérisé en ce que ledit circuit comprend deux branches en parallèle (15,16) dont une première (15) contient la source auxiliaire, ces deux branches étant disposées en série avec le radiateur et le pulseur, des moyens (25) étant prévus pour faire varier la fraction du débit d'air passant dans la prémière branche par rapport au débit total dans les deux branches.

2. Dispositif selon la revendication 1 caractérisé en ce que la source auxiliaire (24) est un radiateur électrique.

3. Dispositif selon l'une des revendications précédentes, caractérisé en ce que des moyens de distribution (22,23) munis d'un organe de rélage de distribution (27) sont prévus dans la boucle, en aval du radiateur et le cas échéant de la source auxiliaire, pour distribuer de façon réglable dans différentes zones de l'habitacle le courant d'air chauffé.

4. Dispositif selon l'une des revendications précédentes, caractérisé en ce qu'il comporte une sortie d'air rechauffé par le radiateur et une entrée d'air frais, munies de moyens de réglage de débit et disposées dans cet ordre sur la boucle fermée, dans le sens de circulation de l'air, entre le radiateur et l'habitacle.

5. Dispositif selon la revendication 4, caractérisé en ce que le pulseur est disposé dans la boucle fermée, dans le sens de circulation de l'air, entre ladite entrée et ladite sortie.

## Claims

1. Apparatus for cooling a vehicle motor (3), comprising a radiator (7) for cooling the motor and a blower (8) for producing a current of air through the radiator, the radiator and blower being arranged in series in an air circuit, the said circuit defining a closed loop including the cabin of the vehicle, with the air which passes through the radiator coming entirely from the cabin and being then adjustably evacuated outside the vehicle and/or recycled into the cabin, the said apparatus including an auxiliary heat source (24) which is adapted to be activated when the heat flow transmitted from the radiator to the air is insufficient for heating the cabin, characterised in that the said circuit comprises two branches (15, 16) in parallel, a first one (15) of which contains the auxiliary source, the two said branches being disposed in series with the radiator and the blower, and means (25) being provided for causing the fraction of the air flow passing through the first branch to be varied with respect to the total flow in the two branches.

2. Apparatus according to Claim 1, characterised in that the auxiliary source (24) is in an electric radiator.

3. Apparatus according to one of the preceding Claims, characterised in that distribution means (22, 23), having a distribution adjusting means (27), are arranged in the loop downstream of the radiator, and, where appropriate, downstream of the auxiliary source, so as to distribute the heated air stream adjustably into different zones of the cabin.

4. Apparatus according to one of the preceding Claims, characterised in that it includes an outlet for air heated by the radiator and a fresh air inlet, the said outlet and inlet being provided with flow adjusting means and being disposed in the closed loop in that order in the direction of flow of the air, between the radiator and the cabin.

5. Apparatus according to Claim 4, characterised in that the blower is disposed in the closed loop between the said inlet and the said outlet in the direction of flow of the air.

## Patentansprüche

1. Vorrichtung zur Kühlung eines Fahrzeugmotors (3), die einen Kühler (7) für den Motor und ein Gebläse (8) zur Erzeugung eines Luftstroms durch den Kühler enthält, die hintereinander in einem Luftkreislauf angeordnet sind, der ein zum Fahrzeuginnenraum geschlossenes Leitungssystem bildet, wobei die durch den Kühler strömende Luft vollständig aus dem Fahrzeuginnenraum kommt und anschließend regulierbar außerhalb des Fahrzeugs abgeleitet und/oder in den Fahrzeuginnenraum zurückgeführt wird, wobei diese Vorrichtung eine zusätzliche Wärmequelle (24) enthält, die zugeschaltet werden kann, wenn die vom Kühler an die Luft übertragene Wärmeabgabe für die Heizung des Fahrzeuginnenraums nicht ausreicht , **dadurch gekennzeichnet,** daß der besagte Kreislauf zwei parallel angeordnete Stränge (15, 16) umfaßt, von denen ein erster Strang (15) die zusätzliche Wärmequelle enthält, wobei diese beiden Stränge mit dem Kühler und dem Gebläse hintereinander angeordnet sind und wobei Mittel (25) vorgesehen sind, um den Anteil des Luftdurchsatzes, der durch den ersten Strang strömt, im Verhältnis zum Gesamtdurchsatz in den beiden Strängen zu verändern.

2. Vorrichtung nach Anspruch 1 , **dadurch gekennzeichnet,** daß die zusätzliche Wärmequelle (24) ein elektrischer Radiator ist.

3. Vorrichtung nach einem der vorangehenden Ansprüche, **dadurch gekennzeichnet,** daß mit einem Verteilungsreglerorgan (27) versehene Verteilermittel (22, 23) im Leitungssystem hinter dem Kühler und gegebenenfalls hinter der zusätzlichen Wärmequelle vorgesehen sind, um den Warmluftstrom regulierbar in verschiedenen Bereichen des Fahrzeuginnenraums zu verteilen.

4. Vorrichtung nach einem der vorangehenden Ansprüche, **dadurch gekennzeichnet,** daß sie einen Auslaß für die durch den Kühler erwärmte Luft und einen Frischlufteinlaß umfaßt, die mit Durchsatzreglermitteln versehen und in dieser Reihenfolge in dem geschlossenen Leitungssystem in der Strömungsrichtung der Luft zwischen dem Kühler und dem Fahrzeuginnenraum angeordnet sind.

5. Vorrichtung nach Anspruch 4 , **dadurch gekennzeichnet,** daß das Gebläse im geschlossenen Leitungssystem in der Strömungsrichtung der Luft zwischen dem besagten Einlaß und dem besagten Auslaß angeordnet ist.
